# EUROPEAN PATENT SPECIFICATION

(11) **EP 1 050 150 B1**
(45) Date of publication and mention of the grant of the patent: **27.03.2002**
(21) Application number: 98966417.2
(22) Date of filing: 29.12.1998
(51) Int. Cl.: H04M 3/42, H04Q 3/00

(54) **TELECOMMUNICATIONS NETWORKS**
TELEKOMMUNIKATIONSNETZWERK
RESEAU DE TELECOMMUNICATION

(30) Priority: 19.01.1998 GB 9801063
(43) Date of publication of application: 08.11.2000
(73) Proprietor: TELEFONAKTIEBOLAGET LM ERICSSON, 126 25 Stockholm (SE)
(72) Inventor: DAHLEN, Johan, S-663 32 Skoghall (SE); LJUNGQVIST, Per, S-650 93 Karlstad (SE)
(74) Representative: Vigars, Christopher Ian
(86) International application number: EP9808500
(87) International publication number: WO9937079

(56) References cited:
- WO-A-96/09714
- US-A- 5 459 775
- US-A- 5 838 768

## Description

The present invention relates to telecommunications networks.

### DESCRIPTION OF THE RELATED ART

Typical telecommunications networks enable communication between different types of calling and called terminals. For example, voice telephones, facsimile machines and modems.

However, since facsimile machines and modems produce unpleasant noises or tones when communicating along the telecommunications network, and particularly upon receiving a telephone call, it is disturbing and a significant problem for a human caller who receives a large amount of unwanted noise from a facsimile machine or modem.

Japanese Patent application No JP 59214365 discloses a system in which the outgoing call type is chosen. by the outgoing apparatus, in dependence upon the proposed receiving apparatus. However, this does not prevent callers and called parties being connected to one another if the actual receiving apparatus is of a different type from that expected.

It is therefore desirable to provide a network based system which avoids callers being subjected to unwanted noise, and in which different calling and called apparatus can be successfully connected to one another.

### SUMMARY OF THE PRESENT INVENTION

According to a first aspect of the present invention, there is provided apparatus for handling a call in a telecommunications network, the apparatus comprising:
reception means for receiving call request information from a caller having a first subscriber type for a call connection to a called party having a second subscriber type, and for receiving call request response information from the called party; and
connection means for connecting the call between the caller and the called party if the call request response information indicates that the second subscriber type is equivalent to the first subscriber type, or for processing the call in dependence upon the difference between the first and second subscriber types if the call request response information indicates that the second subscriber type is not equivalent to the first subscriber type.

According to a second aspect of the present invention, there is provided apparatus for handling a call in a telecommunications network between a first subscriber and a second subscriber, the apparatus comprising:
means for receiving call request information from the first subscriber;
means for sending call information to the second subscriber;
means for receiving call request response information from the second subscriber;
means for determining first and second subscriber types for the first and second subscribers respectively;
means for comparing the first and second subscriber types; and
connection means which is operable, if the first and second subscriber types are equivalent, to connect the call between the first and second subscribers, or, if the first and second subscriber types are not equivalent, to process the call on the basis of the difference between the first and second subscriber types.

According to a third aspect of the present invention, there is provided a method of handling a call in a telecommunications network, the method comprising:
receiving call request information from a caller having a first subscriber type;
routing call information to a called party on the basis of the call request, the called party having a second subscriber type;
receiving call request response information from the called party; and
connecting the call between the caller and the called party if the call request response information indicates that the second subscriber type is equivalent to the first subscriber type, or processing the call in dependence upon the difference between the first and second subscriber types if the call request response information indicates that the second subscriber type is not equivalent to the first subscriber type.

According to a fourth aspect of the present invention, there is provided a method of handling a call in a telecommunications network between a first subscriber and a second subscriber, the method comprising:
receiving call request information from the first subscriber;
sending call information to the second subscriber;
receiving call request response information from the second subscriber;
determining first and second subscriber types for the first and second subscribers respectively;
comparing the first and second subscriber types; and
if the first and second subscriber types are equivalent, connecting the call between the first and second subscribers, or
if the first and second subscriber types are not equivalent, processing the call on the basis of the difference between the first and second subscriber types.

### BRIEF DESCRIPTION OF THE DRAWINGS

Figure 1 is a schematic view of a telecommunications network;
Figure 2 is a block diagram illustrating the parts of a telecommunications network embodying the present invention; and
Figures 3 and 4 show steps in a method embodying the present invention.

### DETAILED DESCRIPTION OF THE PREFERRED EMBODIMENTS

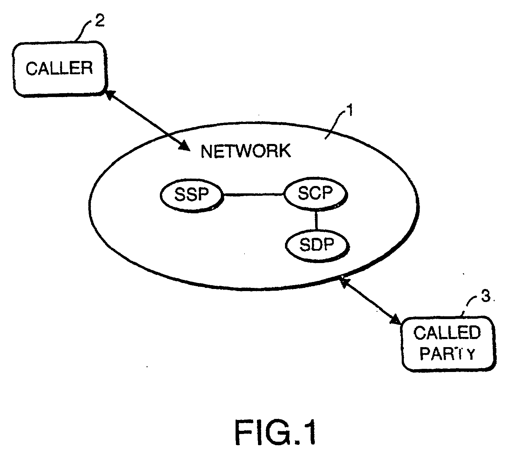

As illustrated in Figure 1, a telecommunications network 1 serves to connect a caller 2 with a called party 3. Typical intelligent networks (IN) have an architecture which is aimed at offering new telecommunications services in a fast, flexible and cost-effective way. An intelligent telecommunications network typically includes a service switching point (SSP) which is a switching system that can intercept telephone calls and query a service control point (SCP). The SCP service includes specific logic and data that allows it to return instructions to an SSP on how further to treat an intercepted call. Such a system can also include a service data point which can extend the SCP memory and also contains service handling logic which are supplemental to the SCP. The service data point can also act as an open interface to open systems.

As described above, current telecommunications networks suffer from the significant disadvantage that human callers can be connected with facsimile machines, modems and the like which produce unwanted and undesirable noise and signalling tones.

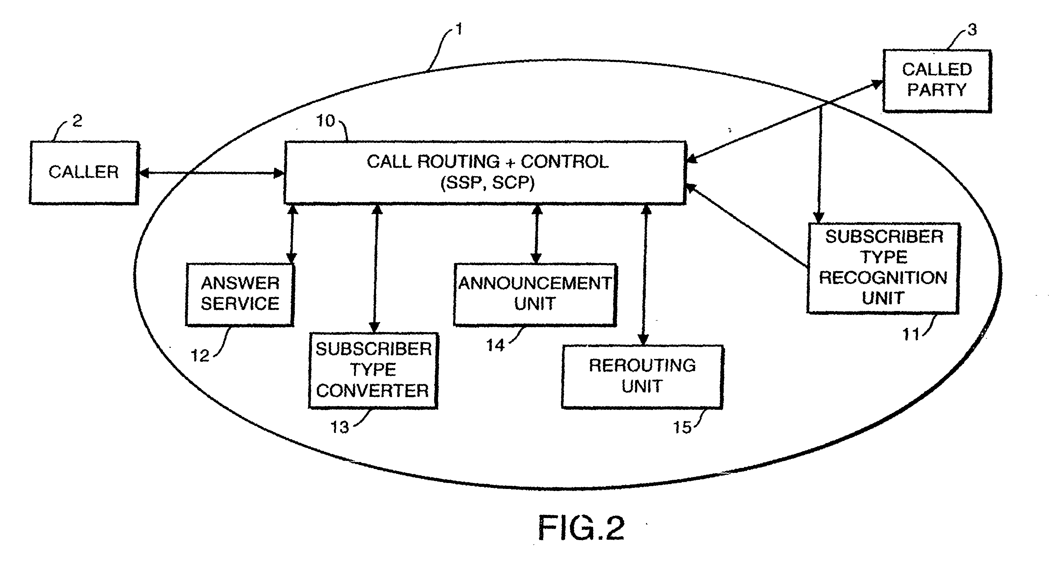

Figure 2 illustrates a telecommunications network embodying a first aspect of the present invention. A caller 2 communicates with a call routing and control unit 10 (which may include SSPs and SCPs). The control unit 10 serves to connect the caller 2 with a called party 3. The caller 2 and called party 3 have respective subscriber types indicative of the type of signal that the subscriber transmits and receives. The subscriber types can simply be divided into voice and non-voice types. The non-voice type may be further divided into facsimile, modem, etc. types (tone signalling types).

A subscriber type recognition unit 11 is connected to monitor responses from the called party 3 which are made in response to incoming call information from the call routing control unit 10.

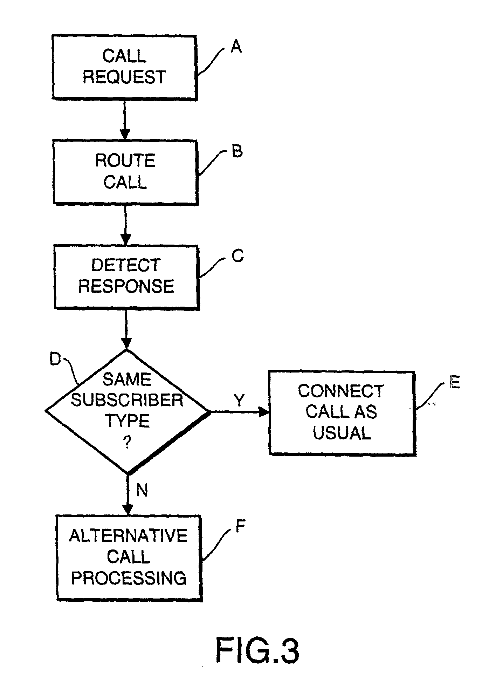

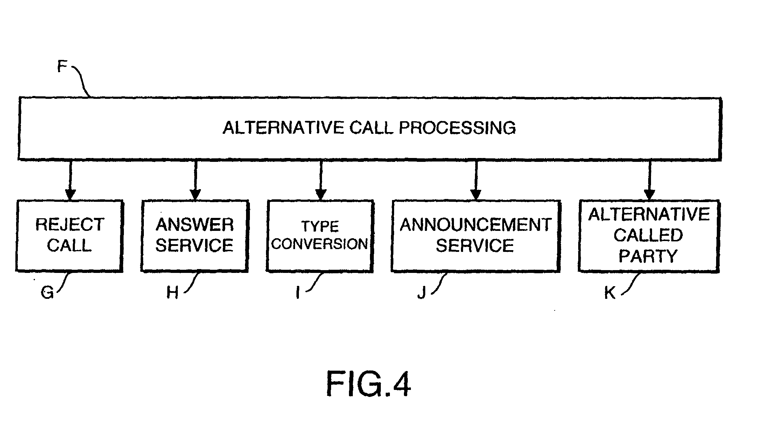

An answer service unit 12, a subscriber type converter 13, an announcement unit 14 and a re-routing unit 15 are all connected to interact with the call routing and control unit 10 in response to control signals from that unit. The function of these units 12 to 15 will be explained in more detail below with reference to Figures 3 and 4.

Operation of the Figure 2 system will now be explained with reference to Figures 3 and 4, as well as to Figure 2.

The caller 2 originates a call by dialling a required called number which results in the sending of a call request to the control unit 10 (step A). The call request contains information which enables the control unit 10 to ascertain the subscriber type of the caller 2. For example, the call request information can explicitly state the subscriber type, or could contain a reference (eg. calling line identifier) for use with a subscriber type database accessible by the control unit 10.

The control unit 10 routes call information, in conventional fashion, to the called party 3 (step B).

The called party 3 responds to the incoming call information from the control unit 10, and this response is detected by the subscriber type recognition unit 11 (step C). A recognition signal is sent from the recognition unit 11 to the call routing and control unit 10 in order to enable the subscriber type of the called party 3 to be ascertained. The call request response information can explicitly hold this information, or could provide a reference for the information, as before.

If the called party 3 is of the same subscriber type as the caller 2, the call is connected as usual between the caller and the called party 3 (steps D and E).

However, if the called party 3 is found to be of a different subscriber type from that of the caller 2, then the control unit 10 operates alternative call processing (step F).

With reference to Figure 4, when the subscriber types of the caller and the called party are different, the call routing and control unit 10 can process the call in any one of a series of ways. Firstly, the call can simply be rejected (step G).

Alternatively, in the case of a voice type caller 2, the call can be accepted, but routed to an answer service (step H) provided by the answer service unit 12. The caller 2 will be asked to leave a message for the called party 3 on the answer service. The called party receives the messages the next time that they make a telephone call and then hang up. The network could then call back to relay the messages. In this way, the network could be sure that the called party 3 is at the telephone.

Alternatively, the call routing and control unit 10 can refer the call to a subscriber type converter 13, which converts the caller's call signal into a type suitable for reception by the called party 3 (step I). For example, the converter 13 can record a voice message from a voice type caller 2, and then convert this message into a data stream appropriate to the called party 3 - a voice message may be converted into a facsimile text message, or an e-mail text message. The converted data stream is then transferred, via the call routing and control unit 10 to the called party 3.

As a further alternative, a voice type caller 2 can be referred to an announcement unit 14, which announces to the caller 2 that the intended called party is not a voice type subscriber, but a facsimile or modem (step J). The caller 2 is advised to redial using a different number, and then the call is rejected (step 364).

A further alternative for any caller type is that the control unit 10 refers to a re-routing unit 15 which serves to provide re-routing information for the particular called party 3 (step K). For example, the called party 3 can supply information in advance to the telecommunications network indicating that any voice calls to a facsimile number should be re-routed to a secondary called party 4. The control unit 10 receives alternative call routing information from the re-routing unit 15 in order to complete the call.

It will be appreciated that the present invention is applicable to any type of telecommunications network, for example, a private switch telecommunications network (PSTN) or a mobile GSM network.

It is intended that the service would be provided by the network provider, and it is particularly useful for subscribers who make many telephone calls that require a voice response. For example, interviewers or telemarketing personnel, secretaries, persons using a headset with which it is not easy to go "on hook" as with an ordinary phone.

However, it will be readily appreciated that a system embodying the present invention is also suitable for non-voice callers. When the caller 2 in fact sending a facsimile or modem message to a called party 3, and the called party 3 is a subscriber requiring a voice message, then the facsimile message can be converted, as described, to a voice message. Alternatively, a facsimile message may be converted to an e-mail message or vice versa.

Systems embodying the present invention enable automatic network handling of calls between incompatible calling and called subscribers.

## Claims

1. Apparatus for handling a call in a telecommunications network, the apparatus comprising:
reception means (10, 11) for receiving call request information from a caller (2) having a first subscriber type for a connection to a called party (3) having a second subscriber type, and for receiving call request response information from the called party (3) ; and
connection means (10) for connecting the call between the caller (2) and the called party (3) if the call request response information indicates that the second subscriber type is equivalent to the first subscriber type, or for processing the call in dependence upon the difference between the first and second subscriber types if the call request response information indicates that the second subscriber type is not equivalent to the first subscriber type.

2. Apparatus for handling a call in a telecommunications network between a first subscriber (2) and a second subscriber (3), the apparatus comprising:
means (10) for receiving call request information from the first subscriber (2);
means (10) for sending call information to the second subscriber (3);
means (10) for receiving call request response information from the second subscriber;
means (11) for determining first and second subscriber types for the first and second subscribers (2, 3) respectively;
means (10) for comparing the first and second subscriber types; and
connection means (10) which is operable, if the first and second subscriber types are equivalent, to connect the call between the first and second subscribers (2, 3), or, if the first and second subscriber types are not equivalent, to process the call on the basis of the difference between the first and second subscriber types.

3. Apparatus as claimed in claim 1 or 2, wherein when the first subscriber type is a voice call type and the second subscriber type is a tone signalling type, the connection means (10) is operable to reject the call.

4. Apparatus as claimed in claim 1 or 2, wherein when the first subscriber type is a voice call type and the second subscriber type is a tone signalling type, the connection means (10) is operable to pass the call to an answering service (12) on which the caller can record a voice message.

5. Apparatus as claimed in claim 1 or 2, wherein when the first subscriber type is a voice call type and the second subscriber type is a tone signalling type, the connection means (10) is operable to pass the call to a secondary called party, which secondary called party has a voice call type.

6. Apparatus as claimed in claim 1 or 2, wherein when the first subscriber type is a voice call type and the second subscriber type is a facsimile message type, the connection means (10) is operable to transfer the call to a voice signal converter which is operable to convert a voice message to a facsimile data message.

7. Apparatus as claimed in any one of the preceding claims, wherein the call request information contains an explicit indication of the caller's subscriber type.

8. Apparatus as claimed in any one of the preceding claims, wherein the call request response information contains an explicit indication of the called party's subscriber type.

9. Apparatus as claimed in any one of claims 1 to 6, further comprising storage means for storing information relating to the respective subscriber types of the caller and the called party, and wherein the call request information and call request response information include reference data for use in accessing the storage means.

10. A method of handling a call in a telecommunications network, the method comprising:
receiving call request information from a caller (2) having a first subscriber type;
routing call information to a called party (3) on the basis of the call request, the called party (3) having a second subscriber type;
receiving call request response information from the called party (3); and
connecting the call between the caller (2) and the called party (3) if the call request response information indicates that the second subscriber type is equivalent to the rirst subscriber type, or processing the call in dependence upon the difference between the first and second subscriber types if the call request response information indicates that the second subscriber type is not equivalent to the first subscriber type.

11. A method of handling a call in a telecommunications network between a first subscriber (2) and a second subscriber (3), the method comprising:
receiving call request information from the first subscriber;
sending call information to the second subscriber;
receiving call request response information from the second subscriber;
determining first and second subscriber types for the first and second subscribers respectively;
comparing the first and second subscriber types; and
if the first and second subscriber types are equivalent, connecting the call between the first and second subscribers (2, 3), or
if the first and second subscriber types are not equivalent, processing the call on the basis of the difference between the first and second subscriber types.

12. A method as claimed in claim 10 or 11, wherein when the first subscriber type is a voice call type, and the second subscriber type is a tone signalling type, the call is rejected.

13. A method as claimed in claim 10 or 11, wherein when the first subscriber type is a voice call type, and the second call subscriber is a tone signalling type, the call is passed to an answering service (12) on which the caller can record a voice message.

14. A method as claimed in claim 10 or 11, wherein when the first subscriber type is a voice call type, and the second call subscriber is a tone signalling type, the call is passed to a secondary called party, which secondary called party has a voice call type.

15. A method as claimed in claim 10 or 11, wherein when the first subscriber type is a voice call type, and the second subscriber type is a facsimile tone type, the call is transferred to a voice signal converter which is operable to convert a voice message to a facsimile data message.

16. A method as claimed in any one of claims 10 to 15, wherein the call request information contains an explicit indication of the caller's subscriber type.

17. A method as claimed in any one of claims 10 to 16, wherein the call request response information contains an explicit indication of the called party's subscriber type.

18. A method as claimed in any one of claims 10 to 15, wherein information relating to the respective subscriber types of the caller (2) and the called party (3) is stored in storage means, and the call request information and call request response information includes reference data for use in accessing the storage means.

## Patentansprüche

1. Vorrichtung zur Behandlung eines Anrufs in einem Telekommunikationsnetzwerk, wobei die Vorrichtung umfasst:
- Empfangsmittel (10,11) zum Empfangen von einer Anrufsanfrageinformation von einem Anrufer (2) mit einem ersten Teilnehmertyp für eine Verbindung mit einer angerufenen Partei (3) mit einem zweiten Teilnehmertyp und zum Empfangen von einer Anrufsanfrageantwortinformation von der angerufenen Partei (3); und
- Verbindungsmittel (10) zum Verbinden des Anrufes zwischen dem Anrufer (2) und der angerufenen Partei (3), falls die Anrufsanfrageantwortinformation anzeigt, dass der zweite Teilnehmertyp äquivalent zum ersten Teilnehmertyp ist oder zur Verarbeitung des Anrufs in Abhängigkeit von dem Unterschied zwischen den ersten und zweiten Teilnehmertypen, falls die Anrufsanfrageantwortinformation anzeigt, dass der zweite Teilnehmertyp nicht äquivalent zum ersten Teilnehmertyp ist.

2. Vorrichtung zur Behandlung eines Anrufes in einem Telekommunikationsnetzwerk zwischen einem ersten Teilnehmer (2) und einem zweiten Teilnehmer (3), wobei die Vorrichtung umfasst:
- Mittel (10) zum Empfangen einer Anrufsanfrageinformation von dem ersten Teilnehmer (2),
- Mittel (10) zum Senden von einer Anrufinformation an den zweiten Teilnehmer (3),
- Mittel (10) zum Empfangen der Anrufsanfrageantwortinformation von dem zweiten Teilnehmer
- Mittel (11) zum Feststellen der ersten und zweiten Teilnehmertypen für die ersten beziehungsweise zweiten Teilnehmer (2, 3),
- Mittel (10) zum Vergleichen der ersten und zweiten Teilnehmertypen, und
- Verbindungsmittel (10), die bewirken, falls die ersten und zweiten Teilnehmertypen äquivalent zueinander sind, dass der Anruf zwischen den ersten und zweiten Teilnehmern (2, 3) zustande kommt oder, falls die ersten und zweiten Teilnehmertypen nicht äquivalent sind, den Anruf auf der Basis des Unterschiedes zwischen den ersten und zweiten Teilnehmertypen zu verarbeiten.

3. Vorrichtung nach einem der Ansprüche 1 oder 2, **dadurch gekennzeichnet, dass**, wenn der erste Teilnehmertyp ein Sprachanruftyp ist und der zweite Teilnehmertyp ein Tonsignaltyp ist, die Verbindungsmittel (10) bewirken, dass der Anruf zurückgewiesen wird.

4. Vorrichtung nach einem der Ansprüche 1 oder 2, **dadurch gekennzeichnet, dass**, wenn der erste Teilnehmertyp ein Sprachanruftyp ist und der zweite Teilnehmertyp ein Tonsignaltyp ist, die Verbindungsmittel (10) bewirken, dass der Anruf einem Beantwortungsdienst (12) übermittelt wird, auf dem der Anrufer eine Sprachnachricht hinterlegen kann.

5. Vorrichtung nach einem der Ansprüche 1 oder 2, **dadurch gekennzeichnet, dass**, wenn der erste Teilnehmertyp ein Sprachanruftyp ist und der zweite Teilnehmertyp ein Tonsignaltyp ist, die Verbindungsmittel (10) bewirken, dass der Anruf einer sekundären angerufenen Partei übergestellt wird, wobei die sekundäre angerufene Partei einen Sprachanruftyp aufweist.

6. Vorrichtung nach einem der Ansprüche 1 oder 2, **dadurch gekennzeichnet, dass**, wenn der erste Teilnehmertyp ein Sprachanruftyp ist und der zweite Teilnehmertyp ein Facsimilesignaltyp ist, die Verbindungsmittel (10) bewirken, dass der Anruf einem Sprachsignalwandler übermittelt wird, mit dem die Sprachnachricht in eine Facsimile-Datennachricht umwandelbar ist.

7. Vorrichtung nach einem der vorstehenden Ansprüche, **dadurch gekennzeichnet, dass** die Anrufsanfrageinformation einen expliziten Hinweis auf den Teilnehmertyp des Anrufers aufweist.

8. Vorrichtung nach einem der vorstehenden Ansprüche, **dadurch gekennzeichnet, dass** die Anrufsanfrageantwortinformation einen expliziten Hinweis auf den Teilnehmertyp der angerufenen Partei aufweist.

9. Vorrichtung nach einem der Ansprüche 1 bis 6, weiterhin umfassend Speichermittel zum Speichern von Informationen, die sich auf die jeweiligen Teilnehmertypen des Anrufers beziehungsweise der angerufenen Partei beziehen, und wobei die Anrufsanfrageinformation und die Anrufsanfrageantwortinformation Referenzdaten zum Einsatz im Zugriff auf die Speichermittel umfassen.

10. Verfahren zur Behandlung eines Anrufes in einem Telekommunikationsnetzwerk, wobei das Verfahren umfasst:
- Empfangen einer Anrufsanfrageinformation von einem Anrufer (2) mit einem ersten Teilnehmertyp,
- Weiterleiten von Anrufinformation an eine angerufene Partei (3) auf der Basis der Anrufanforderung, wobei die angerufene Partei (3) einen zweiten Teilnehmertyp aufweist,
- Empfangen einer Anrufsanfrageantwortinformation von der angerufenen Partei (3), und
- Verbinden des Anrufes zwischen dem Anrufer (2) und der angerufenen Partei (3), falls die Anrufsanfrageantwortinformation anzeigt, dass der zweite Teilnehmertyp zu dem ersten Teilnehmertyp äquivalent ist, oder Verarbeiten des Anrufes in Abhängigkeit von dem Unterschied zwischen den ersten und zweiten Teilnehmertypen, falls die Anrufsanfrageantwortinformation anzeigt, dass der zweite Teilnehmertyp nicht äquivalent zum ersten Teilnehmertyp ist.

11. Verfahren zur Behandlung eines Anrufes in einem Telekommunikationsnetzwerk zwischen einem ersten Teilnehmer (2) und einem zweiten Teilnehmer (3), wobei das Verfahren umfasst:
- Empfangen der Anrufsanfrageinformation von dem ersten Teilnehmer,
- Senden der Anrufinformation an den zweiten Teilnehmer,
- Empfangen der Anrufsanfrageantwortinformation von dem zweiten Teilnehmer,
- Bestimmen der ersten und zweiten Teilnehmertypen für die ersten beziehungsweise zweiten Teilnehmer,
- Vergleichen der ersten und zweiten Teilnehmertypen, und
- falls die ersten und zweiten Teilnehmertypen äquivalent sind, Verbinden des Anrufes zwischen den ersten und zweiten Teilnehmern (2, 3) oder,
- falls die ersten und zweiten Teilnehmertypen nicht äquivalent sind, Verarbeiten des Anrufes auf der Basis des Unterschiedes zwischen den ersten und zweiten Teilnehmertypen.

12. Verfahren nach einem der Ansprüche 10 oder 11, **dadurch gekennzeichnet, dass**, wenn der erste Teilnehmertyp ein Sprachanruftyp ist und der zweite Teilnehmertyp ein Tonsignaltyp ist, der Anruf zurückgewiesen wird.

13. Verfahren nach einem der Ansprüche 10 oder 11, **dadurch gekennzeichnet, dass**, wenn der erste Teilnehmertyp ein Sprachanruftyp ist und der zweite Teilnehmertyp ein Tonsignaltyp ist, der Anruf einem Beantwortungsdienst (12) übermittelt wird, auf dem der Anrufer eine Sprachnachricht hinterlegen kann.

14. Verfahren nach einem der Ansprüche 10 oder 11, **dadurch gekennzeichnet, dass**, wenn der erste Teilnehmertyp ein Sprachanruftyp ist und der zweite Teilnehmertyp ein Tonsignaltyp ist, der Anruf einer sekundären angerufenen Partei übergestellt wird, wobei die sekundäre angerufene Partei einen Sprachanruftyp aufweist.

15. Verfahren nach einem der Ansprüche 10 oder 11, **dadurch gekennzeichnet, dass**, wenn der erste Teilnehmertyp ein Sprachanruftyp ist und der zweite Teilnehmertyp ein Facsimilesignaltyp ist, der Anruf einem Sprachsignalwandler übermittelt wird, mit dem die Sprachnachricht in eine Facsimile-Datennachricht umwandelbar ist.

16. Verfahren nach einem der vorstehenden Ansprüche 10 bis 15, **dadurch gekennzeichnet, dass** die Anrufsanfrageinformation einen expliziten Hinweis auf den Teilnehmertyp des Anrufers aufweist.

17. Verfahren nach einem der vorstehenden Ansprüche 10 bis 16, **dadurch gekennzeichnet, dass** die Anrufsanfrageantwortinformation einen expliziten Hinweis auf den Teilnehmertyp der angerufenen Partei aufweist.

18. Verfahren nach einem der Ansprüche 10 bis 15, bei dem Informationen, die sich auf die jeweiligen Teilnehmertypen des Anrufers (2) beziehungsweise der angerufenen Partei (3) beziehen, in einem Speichermittel gespeichert werden, und wobei die Anrufsanfrageinformation und die Anrufsanfrageantwortinformation Referenzdaten zum Einsatz im Zugriff auf die Speichermittel umfassen.

## Revendications

1. Appareil pour traiter un appel dans un réseau de télécommunication où l'appareil comprend :
- des moyens de réception (10, 11) pour recevoir une information de demande d'appel de la part d'une partie qui appelle (2) avec un premier type d'abonnement pour une connexion avec une partie appelée (3) avec un deuxième type d'abonnement et pour recevoir une information de réponse à la demande d'appel de la part de la partie appelée (3) et
- des moyens de connexion (10) pour connecter l'appel entre la partie qui appelle (2) et la partie appelée (3), si l'information de réponse à la demande d'appel indique que le deuxième type d'abonnement est équivalent au premier type d'abonnement, ou pour traiter l'appel en dépendance à la différence des premiers et deuxièmes types d'abonnement, si l'information de réponse de demande à l'appel indique que le deuxième type d'abonnement n'est pas équivalent au premier type d'abonnement.

2. Appareil pour traiter un appel dans un réseau de télécommunication entre un premier abonné (2) et un second abonné (3), où l'appareil comprend:
- des moyens (10) pour recevoir une information de demande d'appel de la part du premier abonné (2),
- des moyens (10) pour envoyer une information d'appel au second abonné (3) et
- des moyens (10) pour recevoir une information de réponse à la demande d'appel de la part du second abonné,
- des moyens (11) pour déterminer les premiers et seconds types d'abonnement pour les premiers et seconds abonnés (2,3),
- des moyens (10) pour comparer les premiers et seconds types d'abonnement, et
- des moyens de connexion (10) qui, si les premiers et seconds types d'abonnement sont équivalents, connectent l'appel entre les premiers et seconds abonnés (2,3) ou, si les premiers et les seconds types d'abonnement ne sont pas équivalents, traitent l'appel sur la base de la différence entre les premiers et les seconds types d'abonnement.

3. Appareil suivant la revendication 1 ou 2 dans lequel, si le premier type d'abonnement est un type d'appel vocal et le second type d'abonnement est un type de signalisation par son, les moyens de connexion (10) rejettent l'appel.

4. Appareil suivant la revendication 1 ou 2 dans lequel, si le premier type d'abonnement est un type d'appel vocal et le second type d'abonnement est un type de signalisation par son, les moyens de connexion (10) transmettent l'appel vers un service répondeur (12) sur lequel la partie qui appelle peut enregistrer un message vocal.

5. Appareil suivant la revendication 1 ou 2 dans lequel, si le premier type d'abonnement est un type d'appel vocal et le second type d'abonnement est un type de signalisation par son, les moyens de connexion (10) transmettent l'appel vers une deuxième partie appelée, laquelle deuxième partie a un type d'appel vocal.

6. Appareil suivant la revendication 1 ou 2 dans lequel, si le premier type d'abonnement est un type d'appel vocal et le second type d'abonnement est un type de message facsimile, les moyens de connexion (10) transmettent l'appel vers un transducteur de signal vocal qui transforme le message vocal dans un message avec des données en facsimile.

7. Appareil suivant une des revendications 1 à 6 dans lequel l'information de demande d'appel comprend une indication explicite sur le type d'abonnement de la partie qui appelle.

8. Appareil suivant une des revendications 1 à 7 dans lequel l'information de réponse à la demande d'appel comprend une indication explicite sur le type d'abonnement de la partie appelée.

9. Appareil suivant une des revendications 1 à 6 comprenant en outre des moyens de mémoire pour mémoriser de l'information relatif aux types d'abonnement de la partie qui appelle et de la partie appelée et où l'information de demande d'appel et l'information de réponse à la demande d'appel comprend des données de référence pour une utilisation dans l'accès des moyens de mémoire.

10. Procédé pour traiter un appel dans un réseau de télécommunication où le procédé comprend :
- recevoir une information de demande d'appel de la part d'une partie qui appelle (2) avec un premier type d'abonnement,
- transmettre une information d'appel à une partie appelée (3) basée sur la demande d'appel, où la partie appelée (3) a un deuxième type d'abonnement,
- recevoir une information de réponse à la demande d'appel de la part de la partie appelée (3), et
- connecter l'appel entre la partie qui appelle (2) et la partie appelée (3), si l'information de réponse à la demande d'appel indique que le deuxième type d'abonnement est équivalent au premier type d'abonnement, ou traiter l'appel en dépendance à la différence des premiers et deuxièmes types d'abonnement, si l'information de réponse de demande à l'appel indique que le deuxième type d'abonnement n'est pas équivalent au premier type d'abonnement.

11. Procédé pour traiter un appel dans un réseau de télécommunication entre un premier abonné (2) et un second abonné (3), où le procédé comprend:
- recevoir une information de demande d'appel de la part du premier abonné,
- envoyer une information d'appel au second abonné,
- recevoir une information de réponse à la demande d'appel de la part du second abonné,
- déterminer les premiers et seconds types d'abonnement pour les premiers et seconds abonnés,
- comparer les premiers et seconds types d'abonnement, et
- si les premiers et seconds types d'abonnement sont équivalents, connecter l'appel entre les premiers et seconds abonnés (2,3) ou,
- si les premiers et les seconds types d'abonnement ne sont pas équivalents, traiter l'appel sur la base de la différence entre les premiers et les seconds types d'abonnement.

12. Procédé suivant la revendication 10 ou 11 dans lequel, si le premier type d'abonnement est un type d'appel vocal et le second type d'abonnement est un type de signalisation par son, l'appel est rejeté.

13. Procédé suivant la revendication 10 ou 11 dans lequel, si le premier type d'abonnement est un type d'appel vocal et le second type d'abonnement est un type de signalisation par son, l'appel est transmis vers un service répondeur (12) sur lequel la partie qui appelle peut enregistrer un message vocal.

14. Procédé suivant la revendication 10 ou 11 dans lequel, si le premier type d'abonnement est un type d'appel vocal et le second type d'abonnement est un type de signalisation par son, l'appel est transmis vers une deuxième partie appelée, laquelle deuxième partie a un type d'appel vocal.

15. Procédé suivant la revendication 10 ou 11 dans lequel, si le premier type d'abonnement est un type d'appel vocal et le second type d'abonnement est un type de message facsimile, l'appel est transmis vers un transducteur de signal vocal qui transforme le message vocal dans un message avec des données en facsimile.

16. Procédé suivant une des revendications 10 à 15 dans lequel l'information de demande d'appel comprend une indication explicite sur le type d'abonnement de la partie qui appelle.

17. Procédé suivant une des revendications 10 à 16 dans lequel l'information de réponse à la demande d'appel comprend une indication explicite sur le type d'abonnement de la partie appelée.

18. Procédé suivant une des revendications 10 à 15, où les informations relatifs aux types d'abonnement de la partie qui appelle (2) et de la partie appelée (3) sont mémorisés dans des moyens de mémoire et où l'information de demande d'appel et l'information de réponse à la demande d'appel comprend des données de référence pour une utilisation dans l'accès des moyens de mémoire.
